# EUROPÄISCHE PATENTSCHRIFT

(11) **EP 3 295 122 B1**
(45) Veröffentlichungstag und Bekanntmachung des Hinweises auf die Patenterteilung: **24.07.2019**
(21) Anmeldenummer: 16727299.6
(22) Anmeldetag: 10.05.2016
(51) Int. Cl.: G01B 11/27, G01B 11/26, G01M 11/00, G01B 9/02, G02B 27/62

(54) **OPTISCHE MESSANORDNUNG UND VERFAHREN ZUR WINKEL- UND POSITIONSBESTIMMUNG VON MESSOBJEKTEN**
OPTICAL MEASURING ARRANGEMENT AND METHOD FOR DETERMINING THE ANGLE AND POSITION OF MEASUREMENT OBJECTS
DISPOSITIF DE MESURE OPTIQUE ET PROCÉDÉ DE DÉTERMINATION DE LA POSITION ET DE L'ANGLE D'OBJETS À MESURER

(30) Priorität: 15.05.2015 DE 102015006306
(43) Veröffentlichungstag der Anmeldung: 21.03.2018
(73) Patentinhaber: Karlsruher Institut für Technologie, 76131 Karlsruhe (DE)
(72) Erfinder: SCHRÖTER, Tobias, 76297 Stutensee (DE); MEISER, Jan, 66557 Illingen (DE)
(74) Vertreter: Weddigen, Andreas
(86) Internationale Anmeldenummer: PCT/EP2016/000760
(87) Internationale Veröffentlichungsnummer: WO 2016/184547

(56) Entgegenhaltungen:
- US-A1- 2002 131 051
- US-A1- 2008 123 105
- US-A1- 2008 123 105
- US-A1- 2014 226 894
- US-A1- 2014 226 894
- HIROAKI KAI ET AL: "Development of Alignment Technology for Segmented Grating", LASERS AND ELECTRO-OPTICS, 2005. CLEO/PACIFIC RIM 2005. PACIFIC RIM CO NFERENCE ON TOKYO, JAPAN 30-02 AUG. 2005, PISCATAWAY, NJ, USA,IEEE, 30. August 2005 (2005-08-30), Seiten 1172-1173, XP010872560, DOI: 10.1109/CLEOPR.2005.1569688 ISBN: 978-0-7803-9242-7
- HIROAKI KAI ET AL: "Development of Alignment Technology for Segmented Grating", LASERS AND ELECTRO-OPTICS, 2005. CLEO/PACIFIC RIM 2005. PACIFIC RIM CO NFERENCE ON TOKYO, JAPAN 30-02 AUG. 2005, PISCATAWAY, NJ, USA,IEEE, 30 August 2005 (2005-08-30), pages 1172-1173, XP010872560, DOI: 10.1109/CLEOPR.2005.1569688 ISBN: 978-0-7803-9242-7

## Beschreibung

Die Erfindung betrifft ein Verfahren zur Beurteilung einer relativen Anordnung zumindest zweier Röntgengitter zueinander.

Röntgengitter, die bspw. für Talbot-Lau-Interferometrie benötigt werden, müssen exakt zueinander ausgerichtet sein, um eine genaue Messung der jeweiligen zu messenden Parameter zu ermöglichen. Bisher sind Röntgengitter nur in einer bestimmten Größe herstellbar, so dass, um möglichst große Flächen zu erreichen, diese als Kacheln aneinandergelegt werden. Dabei kommt es auf die genaue Ausrichtung dieser Kacheln zueinander an, wofür verschiedene Messmethoden bekannt sind.

Aus dem Stand der Technik sind Vorrichtungen zur berührungslosen, optischen Winkel- und Positionsbestimmung von Röntgengittern oder allgemeinen Messobjekten bekannt, wie in "Precision Nanometrology", Wei Gao, 2010 (ISBN 978-1-84996-254-4, Seite 57 ff) beschrieben ist. Dabei wird ein Reflexionsgitter als Zielmarke auf dem Messobjekt aufgebracht. Ein Beleuchtungsstrahl wird vor der Abbildungsoptik eingespiegelt und von dem Reflexionsgitter auf eine Empfängeroptik zurückgespiegelt. Die Empfängeroptik weist sogenannte Vier-Quadranten-Dioden (QPD) zur Detektion der Lichtstrahlen auf.

Die DE 10 2011 012 611 B4 beschreibt eine Vorrichtung zur berührungslosen Messung eines Rotationswinkels eines Messobjekts um eine optische Achse. Dabei liegt ein zu messendes Objekt relativ zu einer Messanordnung vor. Ein Prisma wird auf das Objekt, dessen Winkelverkippung ausgemessen werden soll, aufgesetzt. Mittels einer strukturierten Beleuchtung kann das Prisma beleuchtet werden. Bei Drehen bzw. Ausrichten des Messobjekts wird das aufgesetzte Prisma in gleicher Weise bewegt. Die von dem Prisma reflektierten Lichtstrahlen werden von einem Detektor aufgefangen und mit einer Messmarke überlagert. Die Lichtstrahlen erzeugen ein Moire-Muster auf dem Detektor. Das Prisma rotiert dabei die Abbildung der empfangenen Lichtstrahlen um die optische Achse.

Damit das Objekt ausgemessen werden kann, ist ein Prisma erforderlich, das auf das Objekt aufgesetzt wird. Damit können nur Verkippungen in zwei Rotationsfreiheitsgraden gemessen werden, wodurch es mittels der vorgenannten Methoden lediglich möglich ist, die Position eines einzelnen Messobjekts relativ zum Messmittel zu bestimmen.

Eine Anordnung zur Beurteilung einer relativen Anordnung zweier optischen Vorrichtungen mittels Interferometrie ist aus US 2002/0131051 A1 bekannt.

Verfahren zur Beurteilung der relativen Anordnung zweier Röntgengitter sind in US 2008/0123105 A1, und auch in der Veröffentlichung "Development of Alignment Technology for Segmented Grating" von H. Kai et al., Lasers and Electro-Optics, 2005, IEEE, 30.08.2005, Seiten 1172-1173 beschrieben.

Ausgehend von diesem Stand der Technik ist es **Aufgabe der vorliegenden Erfindung,** eine verbesserte optische Messanordnung bereitzustellen, die eine Winkel- und Positionsbestimmung mehrerer Röntgengitter auch relativ zueinander ermöglicht.

Diese Aufgabe wird durch Verfahren mit den Merkmalen des Anspruchs 1 gelöst.

Die in diesem Verfahren verwendete Messanordnung weist eine Punktlichtquelle zur Erzeugung eines Lichtstrahlengangs, einen Detektor, eine Linse zur Fokussierung des Strahlengangs auf den Detektor und einen oder mehrere Spiegel zur Lenkung des Strahlengangs auf ein Röntgengitter auf. Die Linse, der Detektor und der Spiegel liegen auf einer gemeinsamen optischen Hauptachse. Erfindungsgemäß ist/sind entlang der optischen Hauptachse zwischen Linse und Spiegel ein oder mehrere Strahlteiler zur Erzeugung von zwei oder mehr zueinander unabhängigen Messstrahlgängen zur Ausleuchtung zweier oder mehrerer Röntgengitter angeordnet.

Die Komponenten Detektor, Linse und Spiegel liegen dabei entlang einer gemeinsamen optischen Achse, die als optische Hauptachse fungiert. Der Spiegel und der Strahlteiler sind um einen Winkel in einem Bereich von 35° bis 60°, bevorzugt um 45°, zu der optischen Hauptachse verkippt. Von der optischen Hauptachse abgeleitet, ist durch den bevorzugt um 45° gestellten Spiegel bzw. Strahlteiler dann jeweils eine weitere optische Achse definiert, die normal zur optischen Hauptachse und mit der optischen Lichtstrahlgangführung der Punklichtquelle übereinstimmt und zumindest parallel zu dieser ist.

Der Einsatz eines weiteren Strahlteilers, um den vom Laser erzeugten Lichtstrahlengang in der Messanordnung aufzuteilen, ermöglicht es, aus vormalig einem Messstrahlengang mindestens zwei Strahlengänge zu erzeugen. Diese können damit unabhängig voneinander auf verschiedene Röntgengitter gelenkt und reflektiert werden. In einer Ausführungsform können die Messstrahlengänge einzeln auf den Detektor treffen oder sich in einer alternativen, bevorzugten Ausführungsform überlappen und treffen. Dabei können die Strahlteiler in der Messanordnung entlang der optischen Hauptachse beweglich bzw. verschiebbar angeordnet sein, so dass verschiedene Röntgengitter gleichzeitig gemessen werden können. Dazu können die Komponenten Spiegel und Strahlteiler zueinander verschoben werden und an beliebigen Positionen fixiert werden, um hiernach die Messung durchzuführen. Es wird damit möglich, Röntgengitter zu vermessen, die sich in einem nahezu beliebigen Abstand zueinander befinden. Entscheidend ist eine parallele Ausrichtung von Spiegel und Strahlteiler zueinander, um eine genaue Messung erreichen zu können.

Auch kann der Spiegel verschiebbar gelagert sein, um weit entfernte Röntgengitter beleuchten zu können. Alternativ kann für jedes Röntgengitter jeweils ein weiterer Strahlteiler vorgesehen sein, damit alle Röntgengitter gleichzeitig beleuchtet werden können und ihre relative Anordnung zueinander bestimmt werden kann.

Im Sinne der Erfindung ist ein "Lichtstrahlengang" der Weg des Lichts, der ohne Ablenkung entlang der optischen Hauptachse geführt ist. "Messstrahlengang" im Sinne der Erfindung ist zum Röntgengitter hingeführtes bzw. vom Röntgengitter reflektiertes Licht.

Die Erfindung kann vorsehen, dass entlang der optischen Hauptachse der Messanordnung die Anordnung des Detektors mit einer Anordnung der Linse korreliert. Der verwendete Detektor kann bevorzugt ein CCD- oder CMOS-Detektor sein. Es können jedoch auch andere Detektoren verwendet werden.

In einer bevorzugten Ausführungsform liegen die Röntgengitter zueinander benachbart. Alternativ sind sie zu- bzw. voneinander beabstandet. So können nicht nur direkt zueinander benachbarte Röntgengitter, sondern auch weiter entfernte Röntgengitter in ihrer Position und Winkellage vermessen werden.

Um den Strahlengang von der Punktlichtquelle zu den Röntgengitter und zurück zu lenken und auf dem Detektor abzubilden, kann zwischen Detektor und Linse ein halbdurchlässiger Spiegel angeordnet sein. Dabei kann die Laser-Punktlichtquelle senkrecht zu der optischen Achse der Messanordnung vorliegen, so dass der Strahlteiler über die Linse beleuchtet werden kann. Halbdurchlässige Spiegel sind bekannt und können je nach Brennweite der verwendeten Optik entsprechend eingesetzt werden.

In einer alternativen Ausführungsform kann vorgesehen sein, dass die Laser-Punktlichtquelle senkrecht zu der optischen Achse der Messanordnung angeordnet ist, so dass der Strahlteiler direkt beleuchtet werden kann. Je nach gewählter Brennweite der abbildenden Linse können so die Platzverhältnisse im Strahlengang besser genutzt werden.

Um eine punktförmige Beleuchtung und damit einen gleichförmigen Lichtstrahlengang zu erzeugen, kann als Punktlichtquelle eine kollimierte Laser-Punktlichtquelle oder eine direkte Punktlichtquelle vorgesehen sein. Dazu kann eine bevorzugte Laser-Punktlichtquelle ein Faserlaser oder auch alternativ eine von einem Laser rückseitig beleuchtete Lochblende sein. So kann auch eine Punktlichtquelle gewählt werden, die über noch eine weitere Linse kollimiert wird. Alternativ kann die Punktlichtquelle auch in den Fokuspunkt vor dem Strahlteiler eingesetzt werden. Andere Lichtquellen, die eine gleiche Qualität an Punktförmigkeit erreichen, können ebenfalls genutzt werden.

In einem nicht beanspruchten Beispiel kann ferner vorgesehen werden, dass im Strahlengang zwischen Spiegel und Röntgengitter oder zwischen Strahlteiler und Messobjekt eine oder mehrere Blende(n), auch Shutter genannt, eingesetzt werden kann. Einzelne Messstrahlengänge können ausgeblendet werden und jeder einzelne Messstrahlengang einzeln vermessen werden oder zu Kalibrierungszwecken auf das jeweilige Messobjekt eingestellt werden. Dazu kann die Blende innerhalb des jeweiligen Strahlengangs auch beweglich angeordnet sein. Die Blende kann zur Verbesserung der Lokalisierungsgenauigkeit eingesetzt werden - so überlagern sich bei einer sehr genauen Positionierung der Messobjekte, abhängig von der gewählten Brennweite der Linse, in einem Bereich von 0,1° bis 1,5°, insbesondere kleiner als 1° die beiden reflektierten Messstrahlen (im Fall zweier Messstrahlen) exakt und erschweren damit eine gute Positionsbestimmung. Der vorgenannte Wert ist wie gesagt abhängig von der gewählten Brennweite der Abbildungslinse und der numerischen Apertur der Beleuchtung (entsprechend der Spotgröße auf dem Kamerasensor). Um kurzzeitig die Überlagerung "auszuschalten", können für jeden oder auch nur für einen Messstrahl Blenden verwendet werden, die eine kurzfristig abwechselnd den jeweiligen Messstrahlgang ausblenden. Dadurch können die beiden Reflexe zeitlich voneinander getrennt werden und separat ausgewertet werden. Dabei kann die Erfindung vorsehen, dass die Rate der Blende bzw. des Shutters mit der Framerate der Kamera übereinstimmt. Als schneller Shutter würde sich ein elektronischer Shutter auf LCD-Basis anbieten. In einem weiteren Beispiel kann auch eine Lösung ohne Shutter vorgesehen sein. Wenn die Röntgengitter in allen rotatorischen Freiheitsgraden zueinander gleich ausgerichtet sein sollen, kann als Indikator hierfür auch die maximale Intensität der sich überlagernden Messstrahlen auf dem Detektor herangezogen werden.

Unter anderem zur Vergrößerung sehr kleiner Röntgengitter oder um Röntgengitter in größerer Entfernung gezielt anvisieren zu können, kann im Strahlengang zwischen Spiegel und zumindest einem Röntgengitter ein Teleskop, insbesondere ein Kepler-Teleskop vorgesehen sein. Andere Optiken, die im Prinzip von unendlich nach unendlich mit einer gewissen Vergrößerung arbeiten können auch genutzt werden. Ferner kann ein Teleskop auch zwischen Strahlteiler und einem der Röntgengitter zum vergrößernden Abbilden des jeweiligen Röntgengitters auf dem Detektor angeordnet sein. Damit können sehr große Abstände zwischen den Röntgengittern überbrückt werden. Um große Abstände zwischen Röntgengittern zu überbrücken, kann auch ein Teleskop zwischen Strahlteiler und Spiegel eingefügt werden. Unter Ausnutzung des optischen Hebels wird der zu messende Winkel verkleinert und Röntgengitter vergrößert abgebildet. Auch können damit große Winkelabstände der Röntgengitter, kleine Gitterperioden oder großen Distanzen zwischen den Röntgengittern ausgeglichen werden. Die Sensitivität des Messgeräts kann damit an die jeweilige Aufgabe angepasst werden. Das Teleskop bildet hierbei von "Unendlich" nach "Unendlich" ab, wobei die Messstrahlen aufgeweitet und gleichzeitig deren Winkel verkleinert wird. Das Problem bei der Erfassung großer Winkel kann sein, dass die Reflexe die Optiken nicht ordnungsgemäß treffen oder sehr große, teure Optiken benötigt werden. Das Teleskop kann dabei die Winkel verkleinern und damit eine bessere Führung des Lichts ermöglichen. Die Apertur der Optiken kann gewählt werden, so dass große Winkel von Reflexionen oder Beugungsbilder keinen negativen Einfluss auf die Messung haben.

Die Verwendung eines Teleskops kann dafür sorgen, dass reflektiertes Licht, insbesondere von dem Röntgengitter, innerhalb des Strahlenganges bleibt. Von anderen Objekten reflektiertes Licht oder Streulicht kann damit den Strahlengang nicht beeinflussen.

Das erfindungsgemäße Verfahren zur Beurteilung einer relativen Anordnung zweier oder mehrerer Röntgengitter wird mit der oben beschriebenen Messanordnung zur Winkel- und Positionsbestimmung von Messobjekten durchgeführt. Zunächst wird die Messanordnung vor den Röntgengittern angeordnet. Dabei können die Röntgengitter versetzt zu einander oder in einer gemeinsamen Ebene liegen, die parallel zu der optischen Hauptachse der Messanordnung liegt. Versetzt heißt hierbei, dass die Röntgengitter in unterschiedlichen Abständen zur optischen Hauptachse vorliegen können. Da in einer möglichen Ausführungsform nur die Winkel der Messobjekte gemessen werden, ist der Abstand zur optischen Achse relativ egal. Die Lage des Messgeräts zu den Röntgengittern spielt jedoch im Rahmen des Fangbereiches der Optik eine untergeordnete Rolle, so dass eine nicht genau parallele Anordnung trotzdem eine gute Messung ermöglicht.

Mittels der Punktlichtquelle wird ein Lichtstrahlengang erzeugt und die Komponenten der Messanordnung entsprechend Ihrer Anordnung entlang der optischen Hauptachse beleuchtet. Dabei können Lichtstrahlen auf einen halb durchlässigen Spiegel geführt werden, der die Strahlen entlang der optischen Hauptachse durch die Linse zu dem Strahlteiler und zu dem Spiegel fokussiert bzw. weiterleitet. Alternativ kann ein Strahlteiler auch direkt beleuchtet werden. An dem Spiegel sowie dem Strahlteiler werden jeweils die dort ankommenden Lichtanteile reflektiert und zu den Röntgengittern geleitet.

Mittels des einen oder der mehreren Strahlteiler(s) und des Spiegels wird der Lichtstrahlengang in zwei oder mehr unabhängige Messstrahlengänge aufgeteilt und dieselben auf die Röntgengitter gerichtet. Hiernach werden mittels des/der Strahlteiler(s) und des Spiegels die von den Röntgengittern reflektierten Messstrahlengänge zurück in den Lichtstrahlengang geleitet und mittels der Linse der Lichtstrahlengang auf den Detektor fokussiert. Dabei entstehen durch Überlagerung der -unterschiedlichen Strahlengänge typische Interferenzmuster. Diese werden mit dem Detektor erfasst, d. h., auf dem Kamerasensor abgebildet. Um das Interferenzmuster zu messen, können die mittels des Kamerasensors aufgenommenen Reflexe zueinander referenziert werden. Aus dem Interferenzmuster kann dann schließlich eine relative Anordnung der Röntgengitter zueinander bestimmt und beurteilt werden. Die Auswertung dieser Beugungsmuster Reflexionen ist bekannt. Auf der Kamera selbst ist die Fourier-Transformation der Beugungsmuster (auch der Moire-Muster) abgebildet.

Für eine Justierung oder Kalibrierung der Messanordnung ist eine parallele Ausrichtung zwischen Strahlteiler und Spiegel notwendig, da Abweichungen zu Messfehlern führen. Es müssen ebene und vergleichsweise große Spiegel verwendet werden, damit beide Messstrahlen gleichzeitig auf den Spiegel gerichtet werden können. Im Idealfall überlagern sich dann beide Messstrahlgänge an der gleichen Position auf dem Detektor. Aufgrund von Fertigungstoleranzen können jedoch Abweichungen vorliegen, die durch eine Justierung des Spiegels oder des Strahlteilers ausgeglichen werden können. Dazu kann der Spiegel rotiert werden, so dass Reflexe eines hierfür verwendeten Kalibrierobjekts auf dem Kamerasensor sich überlagern. Wird Überlagerung, erreicht, liegt die gewünschte Parallelität vor. Ferner kann elektronisch kalibriert werden, wobei dies voraussetzt, dass Spiegel und Strahlteiler parallel zueinander ausgerichtet sind. Die Position der auf dem Kamerasensor abgebildeten Reflexe können gespeichert werden und als konstanter Offset von jeder Messung abgezogen werden.

Das Verfahren ermöglicht damit eine einfache und schnelle Möglichkeit, die relative Position von verschiedenen Röntgengittern zu bestimmen und zu beurteilen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung. Dabei zeigen:
**Fig.1** eine erste, Ausführungsform der optischen Messanordnung mit einem Strahlteiler,
**Fig.2** eine weitere Ausführungsform der optischen Messanordnung,
**Fig.3** eine alternative Messanordnung mit eingesetzter Blende,
**Fig.4** eine Messanordnung mit mehrere Strahlteilern, und
**Fig.5** eine Messanordnung mit in einem Messstrahl angeordneten Teleskopen.

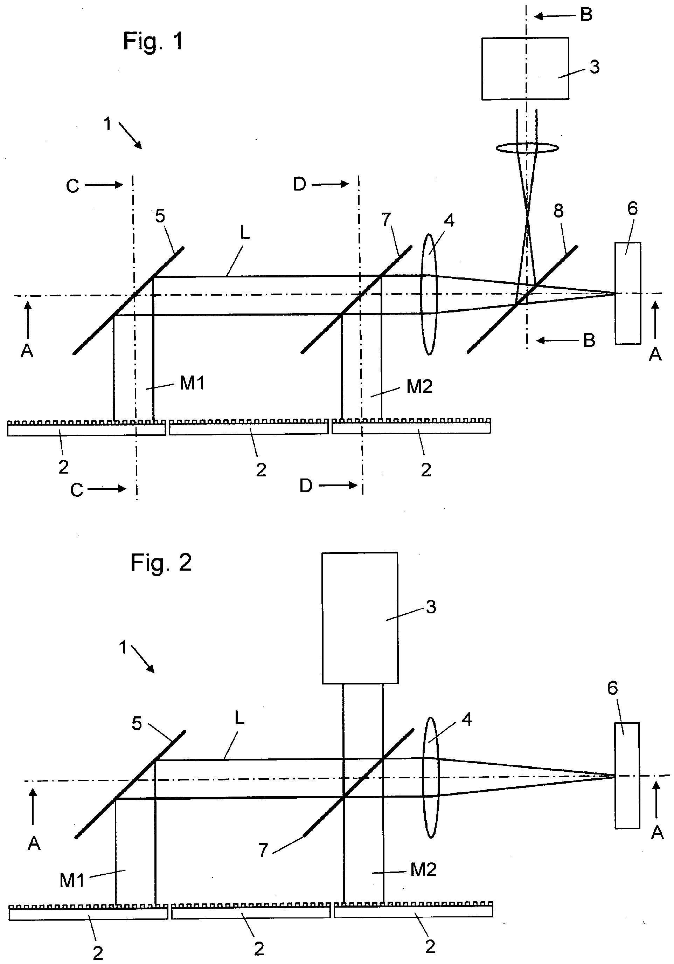

In **Fig.1** weist eine optische Messanordnung 1 zur Winkel- und Positionsbestimmung von Röntgengittern eine Punktlichtquelle **3,** insbesondere eine kollimierte Laser-Punktlichtquelle **3,** die über eine weitere Linse kollimiert wird. zur Erzeugung eines Lichtstrahlengangs **L** in der Messanordnung **1,** eine Linse **4** sowie einen Spiegel **5** auf. Ferner ist ein halbdurchlässiger Spiegel **8** sowie ein Detektor **6** zum Erfassen des von den Röntgengittern reflektierten Lichtstrahlengangs **L** vorgesehen. Detektor **6,** Linse **4** und Spiegel **5** sind entlang einer optischen Hauptachse **A-A** angeordnet. Dabei ist der Laser **3** senkrecht zu dieser optischen Hauptachse A-A entlang einer optischen Achse **B-B** angeordnet und beleuchtet mit seinem Strahlengang **L** den halb durchlässigen Spiegel **8.** Durch die Eigenschaften des halbdurchlässigen Spiegels **8** wird der Strahlengang **L** zunächst von dem Laser **3** zu der Linse **4** zu dem Spiegel **5** geleitet.

Von dem Spiegel **5** ist ein erster Messstrahlengang **M1** in **Fig.1** senkrecht nach unten entlang einer weiteren optischen Achse **C-C** geleitet, die der zweiten optischen Achse des Spiegels **5** entspricht. Die optische Achse **C-C** liegt normal zur optischen Hauptachse **A-A** und ist parallel zur Achse **D-D.** Der erste Messstrahlengang **M1** trifft dabei auf ein Röntgengitter **2.** Unterhalb der Messanordnung **1** sind in **Fig.1** drei solcher Röntgengitter **2** angeordnet. Um nun neben einem ersten Röntgengitter **2** weitere Röntgengitter **2** in ihrer Position und ihrer Winkelausrichtung zu vermessen, ist entlang der optischen Hauptachse **A-A** zwischen Linse **4** und Spiegel **5** ein Strahlteiler **7** angeordnet. An diesem kann der Lichtstrahlengang L geteilt werden, wobei ein Teil des Lichtstrahlenganges **L** zum Spiegel **5** durchgeleitet bzw. zu einem weiteren Röntgengitter **2** abgeteilt wird, und dabei einen zweiten Messstrahl **M2** erzeugt. Der Strahlteiler **7** hat, wie auch der Spiegel **5,** eine zweite optische Achse **D-D,** die zu der optischen Achse **C-C** des Spiegels sowie zur optischen Achse **B-B** des Lasers **3** parallel vorliegt.

Die beiden Messstrahlen **M1, M2** bezeichnen neben dem eingehenden Licht auch das bereits von den Röntgengittern **2** reflektierte Licht. Im Wesentlichen werden die Messstrahlen **M1** und **M2** von den Röntgengittern **2** reflektiert und über die entsprechenden Komponenten Spiegel **5** und Strahlteiler **7** über die Linse **4** auf den Detektor **6** geleitet. Die eingehenden und ausgehenden Strahlengänge überlagern sich und werden über die Linse **4** auf dem Detektor **6** abgebildet. Dort wird die Überlagerung der Strahlengänge dann als Beugungsmuster bzw. eine Fourier-Transformation der überlagerten Gitter sichtbar und daraus die geeigneten Parameter für die (relative) Positions- und Winkellage der Röntgengitter **2** zueinander bestimmt und beurteilt werden.

In **Fig.2** beleuchtet der Laser **3** direkt den Strahlteiler **7.** Dies hat den Vorteil, dass wenn bereits eine punktförmige Lichtquelle verwendet wird, keine zusätzliche Fokussierung durch eine Linse **4** erfolgen muss. Die Linse **4** dient zur Fokussierung der Lichtstrahlengänge auf den Detektor **6.** Je nach gewählter Brennweite der abbildenden Linse **4** können so die Platzverhältnisse im Strahlengang **L** besser genutzt werden. Die optische Achse **B-B** des Lasers **3** und die optische Achse **D-D** des Strahlteilers **7** fallen in **Fig.2** zusammen.

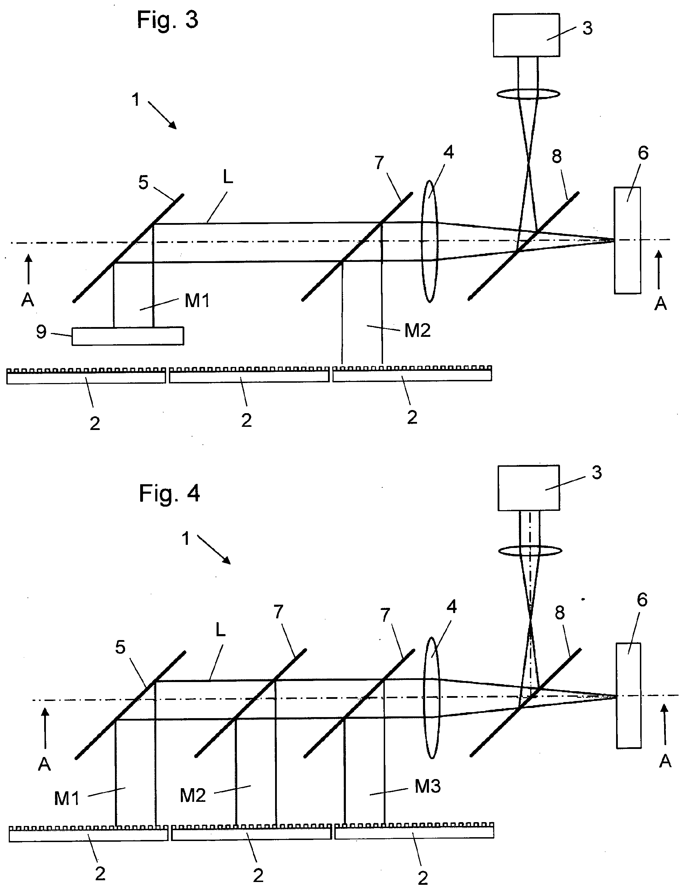

Die Messanordnung 1 in **Fig.3** zeigt die Verwendung einer Blende **9,** wie z. B. ein elektronischer Shutter, wobei die Blende **9** beweglich angeordnet ist und in den jeweiligen Messstrahl, hier Messstrahlengang **M1,** eingefügt werden kann. Damit können einzelne Strahlen ausgeblendet werden und somit ein interferenzfreies Bild eines einzelnen Röntgengitters **2** abgebildet werden bzw. letzteres vermessen werden. Dies kann für hochgenaue Messungen bzw. für eine Kalibrierung verwendet werden.

Nach **Fig.4** sind auch mehrere Strahlteiler **7** möglich, um mehrere Röntgengitter **2** auszumessen. Diese Strahlteiler **7** sind entlang der optischen Hauptachse **A-A** angeordnet und derart voneinander beabstandet, dass mit jedem Strahlteiler **7** entsprechend ein Röntgengitter **2** beleuchtet werden kann.

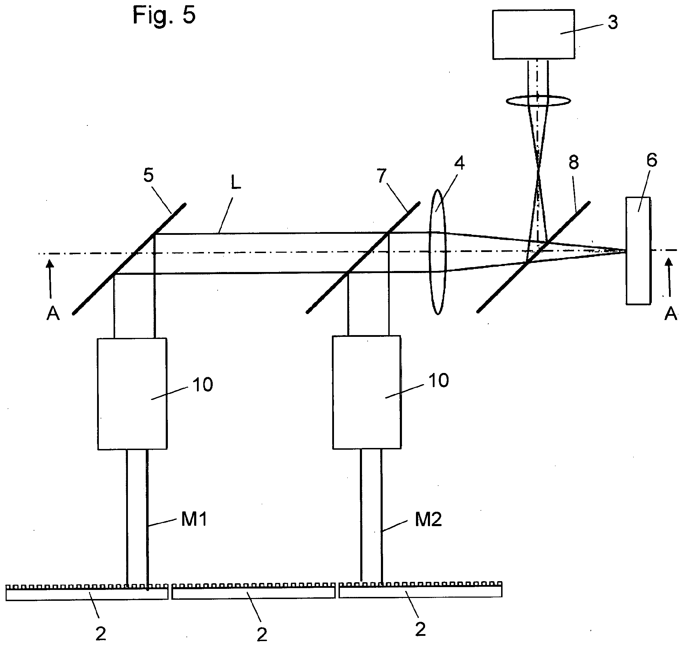

Um weit entfernter Röntgengitter **2** messen zu können bzw. die Strahlengänge reflexionsfrei innerhalb einer vorbestimmten Linie führen zu können, zeigt **Fig.5****,** wie zwischen Röntgengitter **2** und der Messanordnung **1** Teleskope **10** angeordnet sind. Diese dienen eben dazu, die von dem Strahlteiler **7** und dem Spiegel **5** abgelenkten Messstrahlgang **M2** auf die Röntgengitter **2** zu verkleinern bzw. zu vergrößern, und damit ein verbessertes Beugungsbild auf dem Detektor **6** zu erhalten.

### BEZUGSZEICHENLISTE

- 1: Messanordnung
- 2: Röntgengitter
- 3: Punktlichtquelle
- 4: Linse
- 5: Spiegel
- 6: Detektor
- 7: Strahlteiler
- 8: Halbdurchlässiger Spiegel
- 9: Blende
- 10: Teleskop

- A-A: Optische Hauptachse Messanordnung
- B-B: Optische Achse Laser
- C-C: Optische Achse Spiegel
- D-D: Optische Achse Strahlteiler
- L: Lichtstrahlengang
- M1, M2: Messstrahlengang

## Patentansprüche

1. Verfahren zur Beurteilung einer relativen Anordnung zumindest zweier Röntgengitter zueinander unter Verwendung einer Messanordnung, wobei die Messanordnung eine Punktlichtquelle **(3)** zur Erzeugung eines Lichtstrahlengangs, einen Detektor **(6),** eine Linse **(4)** zur Fokussierung des Strahlengangs auf den Detektor **(6)** und zumindest einen Spiegel **(5)** zur Lenkung des Strahlengangs auf ein Röntgengitter aufweist, **wobei** die Linse **(4),** der Detektor **(6)** und der Spiegel **(5)** auf einer gemeinsamen optischen Hauptachse **(A-A)** liegen, und entlang der optischen Hauptachse **(A-A)** zwischen Linse **(4)** und Spiegel **(5)** zumindest ein Strahlteiler **(7)** zur Erzeugung zumindest zweier zueinander unabhängiger Messstrahlgänge **(M1, M2)** zur Ausleuchtung zumindest zweier Röntgengitter angeordnet ist, zur Winkel- und Positionsbestimmung von den Röntgengittern, **umfassend die Schritte**
- Anordnen der Messanordnung **(1)** vor den zumindest zwei Röntgengitter, wobei die Röntgengitter versetzt zueinander oder in einer gemeinsamen Ebene liegen, die parallel zu der optischen Hauptachse der Messanordnung liegt,
- mittels der Punktlichtquelle **(3)** Erzeugen eines Lichtstrahlenganges **(L)** und Beleuchten der Komponenten der Messanordnung **(1)** entsprechend Ihrer Anordnung entlang der optischen Hauptachse **(A-A),**
- mittels des zumindest einen Strahlteilers **(7)** und des Spiegels **(5)** Aufteilen des Lichtstrahlengangs **(L)** in zumindest zwei unabhängige Messstrahlengänge **(M1, M2)** und Richten der Messstrahlengänge **(M1, M2)** auf die Röntgengitter,
- mittels des zumindest einen Strahlteilers **(7)** und des Spiegels **(5)** Leiten der von den Röntgengitter reflektierten Messstrahlengänge **(M1, M2)** zurück in den Lichtstrahlengang **(L)** und mittels der Linse **(4)** Fokussieren des Lichtstrahlengangs **(L)** auf den Detektor **(6),** und
- mittels des Detektors **(6)** Erfassen des Lichtstrahlengangs **(L),** dabei Messen eines Beugungsmuster und daraus Bestimmen einer relativen Anordnung der Röntgengitter zueinander.

## Claims

1. Method for assessing a relative arrangement of at least two X-ray gratings in relation to one another, making use of a measuring arrangement, wherein the measuring arrangement comprises a point light source (3) for generating a light beam path, a detector (6), a lens (4) for focusing the beam path onto the detector (6), and at least one mirror (5) for deflecting the beam path onto an X-ray grating, **wherein** the lens (4), the detector (6), and the mirror (5) lie on a common optical main axis (A-A), and arranged along the optical main axis (A-A) between the lens (4) and the mirror (5) is at least one beam splitter (7) for generating at least two measurement beam paths (M1, M2) that are independent from one another, for illuminating at least two X-ray gratings, for the determining the angle and position of the X-ray gratings, **comprising the steps**
- arranging the measuring arrangement (1) before the at least two X-ray gratings, wherein the X-ray gratings lie offset to one another or lie in a common plane, which lies parallel to the optical main axis of the measuring arrangement,
- by means of the point light source (3), generating of a light beam path (L) and illuminating the components of the measuring arrangement (1) according to their arrangement along the optical main axis (A-A),
- by means of the at least one beam splitter (7) and the mirror (5), splitting of the light beam path (L) into at least two independent measurement beam paths (M1, M2), and directing of the measurement beam paths (M1, M2) onto the X-ray gratings,
- by means of the at least one beam splitter (7) and the mirror (5), leading the measurement beam paths (M1, M2) reflected by and from the X-ray grating back into the light beam path (L), and, by means of the lens (4), focusing of the light beam path (L) onto the detector (6), and
- by means of the detector (6), detecting the light beam path (L), in this situation measuring a diffraction pattern, and, from this, determining a relative arrangement of the X-ray gratings.

## Revendications

1. Procédé d'évaluation de la position relative l'une par rapport à l'autre d'au moins deux grilles à rayons X en utilisant un dispositif de mesure, le dispositif de mesure comprenant une source de lumière ponctuelle (3) permettant d'obtenir un chemin de faisceau de lumière, un détecteur (6), une lentille (4) permettant de focaliser le chemin du faisceau sur le détecteur (6) et au moins un miroir (5) permettant de dévier le chemin du faisceau sur une grille à rayons X, la lentille (4), le détecteur (6) et le miroir (5) étant situés sur un axe optique principal commun (A-A), le long de l'axe optique principal (A-A), entre la lentille (4) et le miroir (5) étant monté au moins un diviseur de faisceau (7) permettant d'obtenir au moins deux chemins de faisceau de mesure (M1, M2) indépendants l'un de l'autre permettant d'éclairer au moins deux grilles à rayons X, pour permettre la détermination de l'angle et de la position des grilles de rayons X,
procédé comprenant des étapes consistant à :
- positionner le dispositif de mesure (1) à l'avant des deux grilles à rayons X, les grilles à rayons X étant décalées l'une par rapport à l'autre ou étant situées dans un plan commun qui est parallèle à l'axe optique principal de l'unité de mesure,
- au moyen de la source de lumière ponctuelle (3) produire un chemin de faisceau de lumière (L) et éclairer les composants du dispositif de mesure (1) conformément à leur position le long de l'axe optique principal (A-A),
- au moyen du diviseur de faisceau (7) et du miroir (5) subdiviser le chemin du faisceau de lumière (L) en au moins deux chemins de faisceau de mesure (M1, M2) indépendants et orienter les chemins de faisceau de mesure (M1, M2) sur les grilles à rayon X,
- au moyen du diviseur de faisceau (7) et du miroir (5) reconduire les chemins des faisceaux de mesure (M1, M2) réfléchis par les grilles à rayons X dans le chemin (L) du faisceau de lumière, et, au moyen de la lentille (4), focaliser le chemin du faisceau de lumière (L) sur le détecteur (6), et
- au moyen du détecteur (6) détecter le chemin (L) du faisceau de lumière, en mesurant ainsi un diagramme de diffraction, et déterminer à partir de celui-ci la position relative des grilles à rayon X l'une par rapport à l'autre.
